# EUROPEAN PATENT SPECIFICATION

(11) **EP 4 418 603 B1**
(45) Date of publication and mention of the grant of the patent: **30.07.2025**
(21) Application number: 23382138.8
(22) Date of filing: 15.02.2023
(51) Int. Cl.: H04L 9/00, H04L 9/32

(54) **OFF-CHAIN PUSH-MODE MULTI-FACTOR AUTHENTICATION METHOD AND SYSTEM FOR BLOCKCHAIN SERVICES**
VERFAHREN UND SYSTEM ZUR MULTIFAKTORAUTHENTIFIZIERUNG IM OFF-CHAIN-PUSH-MODUS FÜR BLOCKCHAIN-DIENSTE
PROCÉDÉ ET SYSTÈME D'AUTHENTIFICATION MULTIFACTORIELLE EN MODE PUSH HORS CHAÎNE POUR SERVICES DE CHAÎNE DE BLOCS

(43) Date of publication of application: 21.08.2024
(73) Proprietor: Telefonica Innovacion Digital SL, 28050 Madrid (ES)
(72) Inventor: Yang, Xiaoyuan, 28013 Madrid (ES); Muñoz Martines, Lucia, 28013 Madrid (ES); Espinosa Garcia, Javier, 28013 Madrid (ES); Garcia Muñoz, Luis Angel, 28013 Madrid (ES)
(74) Representative: Carlos Hernando, Borja

(56) References cited:
- EP-B1- 2 819 371
- CN-A- 111 027 035
- US-A1- 2020 058 021
- US-A1- 2020 213 128
- US-A1- 2021 084 024

## Description

### Technical Field

The present invention generally relates to blockchain and authentication techniques. More particularly, the present invention relates to a method and to a system for off-chain push-mode authentication of end-users in blockchain services through more than one authentication factor.

### Background of the Invention

Web3 is the new distributed technology that changes how Internet will work in next decades. Blockchain is the core element of any web3 infrastructure. It provides a decentralized immutable database for smart contracts where different applications can be created, such as crypto coins, NFT or DAO. Multiple nodes run smart contracts in fully decentralized way and reaches a consensus about a new state for the blockchain.

Consensus in smart contract requires multiple conditions. First, all nodes share a common language about how a smart contract should be created and understood. Second, all input information that the smart contract needs to compute the new state should be available and common in all nodes during the execution. This second requirement implies that any input information could not be acquired from any dynamic sources. For instance, a smart contract cannot read an input data from a temperature sensor, because temperature may change from one read to another. General speaking, smart contracts cannot interact with any external APIs to retrieve real world data. To solve this problem, oracles systems (such as Chainlink) are created. In order to use oracle, the logic of a smart contract has to be split in different steps. First, the smart contract requests a data from the real world to an oracle. The oracle computes the data and write it into the blockchain creating a new state. The smart contract can then read the data and performs the consensus process.

Since smart contracts need to be executed multiple nodes for consensus, all data in blockchain should be publicly accessible. The identify of user in web3 is represented by a public key. All objects/data related with a user are associated to the public key without revering the real user. For instance, name of user o any other personal data should never be stored in the blockchain because they will be publicly accessible to anyone.

A public key is always associated with a private key. Any operation that requires authorization from the user needs to interact with a specialized software (called Wallet) that performs a cryptographic signature process that can only success if appropriate private key is provided. The private key cannot be recovered in any form if it is lost. A collateral consequence of this is the fact that the public key cannot be invalidated if the private key is lost.

Key invalidation and key recovery are very common processes in the web2. If one loses a password (key), (s)he just needs to start the password recovery process that normally means introducing a new password in a magic link that her/him got in an email. Same process can be used to invalidate a password or key.

In order to increase key based security, two-factor authentication (2FA) is well adopted in web2 services. 2FA is a security layer that make sure that users trying to access an online service are who they say they are. Instead of granting immediately access to the data after checking the key, users will be asked to provide another information that only the real user knows (PIN, password o answer to a secret question), has (a credit card, a smart-phone or a hardware token) or is (fingerprint, iris or voice print).

Current 2FA mechanisms can't be adopted by Web3 because any secret information should be publicly available in the blockchain. If we want to check if a user really knows the answer to a secret question in the smart contract, the answer should be in the blockchain so the smart contract can read it.

2FA provider could be implemented in different ways in web2. For instance, user may need to install an application in phone that ask user for approval whenever a 2FA is requested. The most popular way, however, is the utilization of SMS. In such a case, the 2FA service sends a SMS with a PIN number to the user's phone and ask user to introduce PIN back to a web portal. Since only user with access to the phone will receive the SMS, it provides an extra guarantee about the real identify of the user.

Depending how the 2FA is provided by the end-user, 2FA services could be divided in two categories:
- Pull-Mode category: In this case, service needs to request end-users for 2FA every time it is required. For instance, end-users need to send a number received from SMS or interact with an application in the phone to authorize a specific interaction with the service.
- Push-Mode category: In this case, 2FA is represented as a binary status (on or off) in the 2FA provider server. By interacting with the 2FA provider server, end-users are able to change the binary status. Each time a service wants to request 2FA from end-user, it interacts with the 2FA provider server to request the binary status. If the status is on, the service request will proceed. Otherwise, the request will be canceled. EP 2819371-B1, which incorporates blockchain as part of an authentication workflow, provides an implementation of such push-mode 2FA service.

In US11257078B2, the blockchain is used as 2FA for bank transactions. In this case, the system tries to solve the fact that 2FA based on mobile phones may fails when end-user is out of coverage of the cellular network. By requiring end-users to store one-time password in the blockchain, banking authorities can use public blockchain as 2FA, instead of the mobile phone.

In both previous patents, blockchain technology is used to implement 2F2 in different web2 applications.

On the other hand, US11025431B2 proposes to use a second wallet in a sidechain to perform 2FA. Before performing the transaction in the main chain, end-user need to post a token in the sidechain using the second wallet. The main chain is configured to check the existence of the token before proceeding the operation. The usage of sidechain provides a full distributed web3 solution. Second wallet is publicly trackable by looking the origin address of the token in the sidechain. US11025431B2 uses another wallet to provide 2FA, and not off-chain data for 2FA, as present invention does. In present invention the data that is used for 2FA comes from outside of blockchain. The separation of first authentication key (wallet) and second factor improves security because the information goes in separated channels. For instance, if a hacker manages to access the wallet management software (such as *Metamask*), it can potentially steal the two wallets used for authentication in US11025431B2. With present invention, hacker need both to steal the wallet as well as an off-chain data/device, such as the smartphone.

### Description of the Invention

Embodiments of the present invention provide, according to a first aspect, a method for multi-factor authentication (e.g. 2FA) for blockchain services. The method comprises holding, by a push-mode multi-factor authentication server, an account of an end-user, the account being identifiable via an accountID; establishing, by the end-user, a multi-factor approval status in the push-mode multi-factor authentication server; and in response to an operation to be performed in a customer smart contract, the customer smart contract interacting with the push-mode multi-factor authentication server to confirm the established multi-factor approval status.

According to the invention, the interacting step comprises checking whether a mapping between a public key and the accountID exists, wherein if the mapping exists, a multi-factor authentication provider smart contract, that is deployed or operates in at least one blockchain, returns the accountID together with an address of an oracle server and an integer that identifies a task in the oracle server, and if the mapping does not exist, a noPaired notification is returned; calling a function in SDK and performing an in-chain call to a function OracleRequest in an oracle operator smart contract, the function Oracle Request including: the accountID, a callback smart contract address; a callback smart contract function Id, an oracle token address, and the integer; performing, by the oracle operator smart contract, a gas payment and emitting an event with the accountID and the integer as parameter; upon reception of the event, the oracle server executing the task identified by the integer, the task performing an API call to an oracle interaction backend that further calls a checkStatus API; in response to the checkStatus API, the multi-factor authentication server returning the established multi-factor approval status to the oracle server via the oracle interaction backend; given the established multi-factor approval status, performing, by the oracle server, a call to a function fullfillOracleRequest2 of the oracle operator smart contract, the latter further propagating the established multi-factor approval status to the customer smart contract.

According to a second aspect, present invention also proposes a system for multi-factor authentication (e.g. 2FA) for blockchain services. The system comprises at least one blockchain; a multi-factor authentication provider smart contract configured to be deployed or to operate in the at least one blockchain; an oracle network comprising an oracle server, an oracle operator smart contract and an oracle interaction backend; and a push-mode multi-factor authentication server. The system of the second aspect of the invention is configured to implement the method of the first aspect of the invention.

In some embodiments, the calling to the function in SDK is only made if the mapping exists.

In some embodiments, the mapping is created by executing a pairing process that provides a pairingToken; exposes the public key to a decentralized application, DAPP; calls a smart contract function pair (public key, pairingToken) of the multi-factor authentication provider smart contract; performs an in-chain call to the oracle operator smart contract; performs, by the oracle operator smart contract, a gas payment, the oracle operator smart contract further emitting an event pair that includes: the public key, the pairingToken, and the integer to execute the pairing; generates, by the oracle server, a unique requestID, the oracle server further running a pairing task by interacting with the oracle interaction backend; verifies, by the oracle interaction backend, that the pairingToken is not expired and that is associated to the end-user by interacting with the multi-factor authentication server, the latter returning the accountlD in case the verification is true; performs, by the oracle server, a call to the function fullfillOracleRequest2 of the oracle operator smart contract with accountID as input parameter, the oracle operator smart contract performing a callback to said function towards the multi-factor authentication provider smart contract, such that upon reception of the callback the mapping is created.

In some embodiments, the public key is an identifier of a wallet (or WalletID).

In some embodiments, the blockchain services include web3 services.

Therefore, present invention provides multi-factor authorization to blockchain and has the following advantages:
- It effectively provides multi-factor authorization (e.g. 2FA) to the current web3 technology.
- Only multi-factor authorization account id is stored in the blockchain. The user personal information is preserved since it is not pushed to the blockchain.
- It reduces user interaction by changing to push-mode multi-factor authorization.
- It doesn't require modification in the existing push-mode multi-factor authorization provider system.
- Multi-factor authorization is always optional and it is activated when a user activates the pairing between the walletlD and an existing push-mode multi-factor authorization account.
- Pairing process is done only once independently of the number of customer smart-contracts that wish to have a multi-factor authorization from the user.

### Brief Description of the Drawings

The previous and other advantages and features will be more fully understood from the following detailed description of embodiments, with reference to the attached figures, which must be considered in an illustrative and non-limiting manner, in which:
Fig. 1 is a schematic diagram showing the pairing process implemented by the present invention, according to an embodiment.
Fig. 2 is a schematic diagram showing the 2FA request process implemented by the present invention, according to an embodiment.

### Detailed Description of the Invention and of Preferred Embodiments

Present invention provides a method and system for off-chain push-mode multi-factor authentication (MFA) of users for blockchain services, in particular for Web3 services. In some particular embodiments, the MFA refers to 2FA.

Particularly, the invention comprises the following entities/elements:
- Blockchain: is a shared, immutable ledger that hold data or state.
- Multi-factor Authentication (MFA) Provider Smart Contract 240: is the smart contract in the blockchain that provides all interactions required for MFA.
- Oracle operator smart contract 250: is the second smart contract deployed by the MFA Provider Smart Contract 240. The goal of this smart contract is the interaction with an oracle network, for instance, to implement the gas payment when interacting with oracle.
- Oracle server (or node) 275: it runs different off-chain tasks. Each task is uniquely identified by an integer called jobID.
- Operation: An operation in a customer smart contract 226 is represented by a function. For instance, an operation could transfer a token from a public key (user) to another. In such a case, the function needs to access the public key of the owner user, the signature that authorizes the transfer (signed by the owner) and the destination public key.
- Oracle interaction backend 276: is the backend system that interacts with the oracle network and the MFA backend 300 to check the status of the MFA status given an operation. Push-mode MFA server (or backend) 300: is the server/backend that implements all interactions with end-users for push-mode MFA.
- MFA pairing DAPP 230: is a distributed web application where users can associate an MFA account with a public key (walletlD).
- MFA customer smart contract SDK 225: is piece of software that can be integrated in any smart contract that wants interact with the MFA Provider Smart Contract 240.

Particularly, in some embodiments, a pairing process is executed/implemented. It is assumed that the end-user already has account in a push-mode MFA server 300. In an embodiment, for the pairing process, the method implements the API defined by Telefonica's Latch solution (https://latch.elevenpaths.com/www/index.html). Nevertheless, other push-mode MFA services/solutions could be equally used.

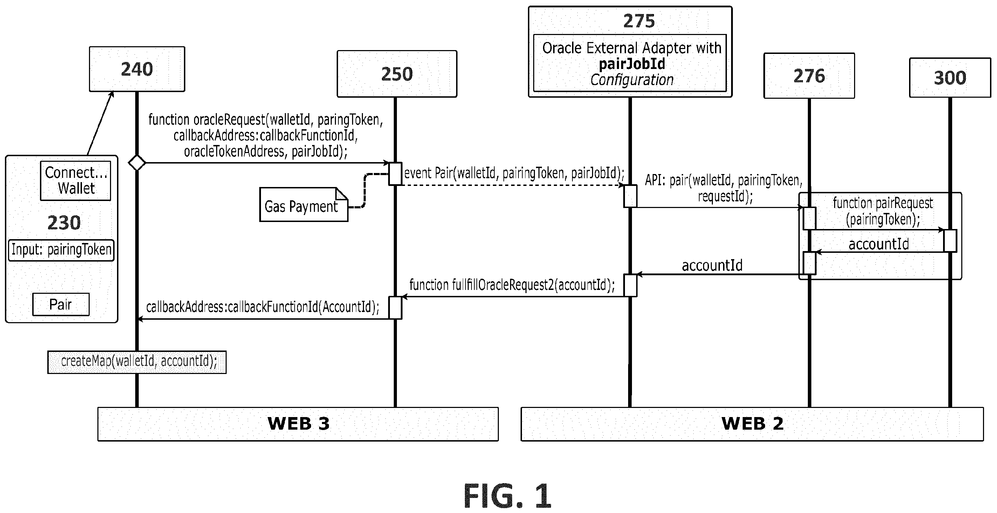

In said Latch solution, the pairing process is achieved by calling pairRequest(pairingToken) API, where pairingToken is an expiring random token that only the authorized user knows; provided by an application installed in the user's phone device. Fig. 1 illustrates an example of the proposed pairing process, which can comprise the following steps.

First, the end-user accesses the existing MFA application, in this particular case a 2FA application, and requests a pairingToken to pair a new service. The same pairingToken will be temporally stored in the Push-Mode MFA server 300. Then, the end-user accesses the MFA pairing DAPP 230 and connects with a wallet management software (such as the Metamask). Once connected, the walletlD (i.e. the public key of the end-user) is revealed to the DAPP 230. Next, the end-user introduces the pairingToken to an input field in the MFA pairing DAPP 230 and activates the pairing process that calls the smart contract function pair(walled, pairingToken) of the MFA provider smart contract 240.

The MFA provider smart contract 240 performs an in-chain call to function oracleRequest to oracle operator smart contract 250 with all required information. Specifically, it passes as parameter the following information:
a. End-user's walletID
b. PairingToken
c. CallbackAddress, which is the address of the MFA Provider Smart Contract 240
d. Callback Function ID, which is the ID that identifies the callback function
e. Oracle Token Address for gas payment in oracle network
f. pairJoblD that identifies the task to execute for pairing

The oracle operator smart contract 250 performs the gas payment and emits an event Pair with all required parameters (walletID, pairingToken and pairJobID). The Pair event eventually arrives to an oracle server 275. The pairJoblD indicates the associated pairing task. The oracle server 275 generates a unique requestld and runs the pairing task. This pairing task calls pair API to oracle interaction backend 276. All parameters are passed in the API call (walletlD, pairingToken, requestld). Then, the oracle interaction backend 276 interacts with the Push-Mode MFA server 300 by calling the pairRequest API. The Push-Mode MFA server 300 verifies that pairingToken is not expired and is indeed created by a valid end-user. In such a case, it returns the accountID of the end-user. The accountID is then returned to the oracle server 275 as result of running the pairing task. The oracle server 275 then performs a call to the function fullfillOracleRequest2 of the oracle operator smart contract 250 with accountID as the input parameter. The oracle operator smart contract 250 performs the callback. The callback smart contract address and function ID is represented by callbackAddress and callbackFunctionld which are received from oracleRequest call.

Once the accountID is propagated to MFA provider smart contract 240, it creates the mapping between walletlD and accountID. The pairing process is then completed, and it is notified to the end-user in the MFA pairing DAPP 230.

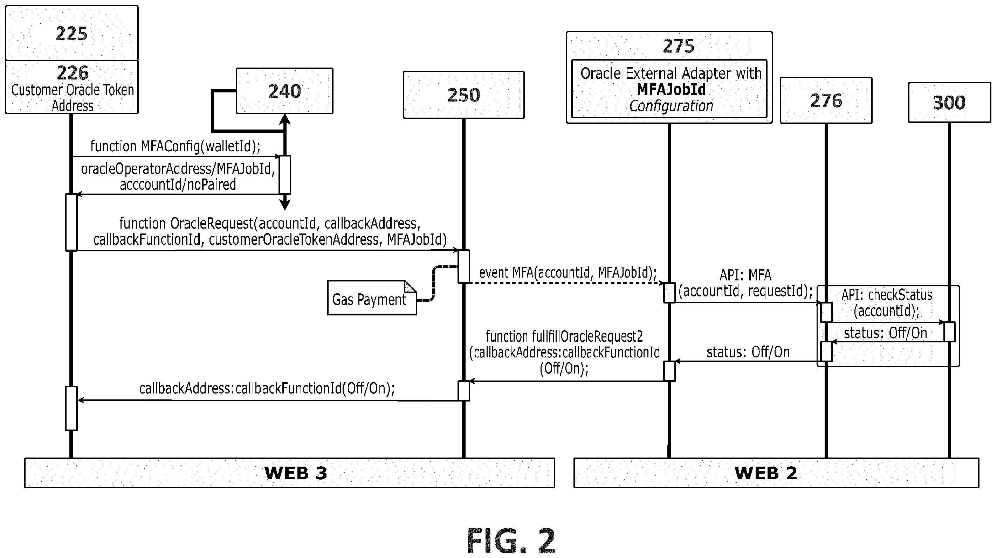

With reference now to Fig. 2, therein an embodiment of the MFA request process is illustrated. The customer smart contract 226 needs to integrate with MFA customer smart contract SDK 225 to perform MFA. According to this particular embodiment, the following process is stablished to perform the MFA. First, Given a walletID, the customer smart contract 226 calls MFAConfig function from SDK. The call generates an in-chain call to MFAConfig function from MFA provider smart contract 240. After that, the MFA provider smart contract 240 checks the walletID and accountID mapping. Consequently, if a pairing between the walletID and an accountID exists, it returns the accountID together with the address of the oracle operator smart contract 250 and 2FAJobID that identifies the task associated in the oracle server 275. Otherwise, it returns noPaired. In this latter caser, it is the responsibility of the customer smart contract 226 to decide what to do.

By calling a function in SDK, the customer smart contract 226 performs an in-chain call to the function OracleRequest in the oracle operator smart contract 250. Required parameters are:
a. User's accountID
b. Callback smart contract address
c. Callback smart contract function ID
d. Customer's oracle token address
e. MFA JobID

The oracle operator smart contract 250 performs the gas payment and emits the event MFA with accountID and MFAJobID as parameter. The event eventually arrives to the oracle server 275 which executes the task associated with MFAJobID for MFA. The MFA task performs an API call (MFA) to the oracle interaction backend 276.

Then, the oracle interaction backend 276 calls the checkStatus API so that the Push-Mode MFA server 300 checks the approval status of the end-user, identified by parameter accountID and returns to the oracle interaction backend 276. The approval status eventually propagates to the oracle server 275. Given the status, the oracle server 300 performs a call to the function fullfillOracleResult2 in the oracle operator smart contract 250. The status is then propagated to the customer smart contract 226 by calling a smart contract function identified by callbackAddress:callbackFunctionld. The customer smart contract 226 finally decides the next action given the approval status in the push-mode MFA server 300.

According to the invention, the MFA provider smart contract 240 is deployed in a blockchain to provide logic required for the MFA. If multiple blockchains exist, the smart contract provider 240 will operate or be deployed in each blockchain.

The MFA provider smart contract 240 provides following state variables i) the mapping between end-user walletID and accountID, which it is implemented as a map structure where key is the walletID and value is accountID; ii) oracle Token Address for gas payments in the oracle network interactions; iii) oracle Operator Address is the address of the smart contract that provides support for oracle network interactions; iv) Pair Job ID is the integer that identifies the job that will be executed for a pairing process; v) MFA Job ID is the integer that identifies the job that will be executed for a MFA process.

The MFA provider smart contract 240 also contains a set of functions that only owner can execute:
- UpdateOracleTokenAddress(address): it updates the address in variable Oracle Token Address.
- UpdateOracleOperatorAddress(address): it updates the address in variable Oracle Operator Address.
- UpdatePairJobID(jobID) and Update MFAJobID(jobID): provides the function required to change the joblD of the pairing and MFA process.

Lastly, it also contains two public functions:
- Pair(walletID, PairingToken): this function is called when an end-user wants to pair the walletID to the push-mode MFA user account.
- MFAConfig(walletID): this function checks if the walletID is associated with any MFA user account.

The customer smart contract 226 interacts with two functions to provide the MFA service. Specifically, it interacts with:
- MFAConfig(walletID): it calls MFAConfig() function in the MFA provider smart contract 240. This function returns the accountID associated with the walletlD. It can also return NoPaired if the walletID is not associated with any accountID. It is responsibility of the customer smart contract 226 to decide what to do if there is no association.
- MFA(accountID): it interacts with oracle operator smart contract 250 to perform MFA.

Those having ordinary skill in the art will recognize that numerous modifications can be made to the specific implementations described above. The implementations should not be limited to the particular limitations described. Other implementations may be possible.

The scope of the invention is defined in the claims that follow.

## Claims

1. A method for multi-factor authentication for blockchain services, the method comprising:
holding, by a push-mode multi-factor authentication server (300), an account of an end-user, the account being identifiable via an accountID;
establishing, by the end-user, a multi-factor approval status in the push-mode multi-factor authentication server (300);
in response to an operation to be performed in a customer smart contract (226), the customer smart contract (226) interacting with the push-mode multi-factor authentication server (300) to confirm the established multi-factor approval status, the interacting step comprising:
- checking whether a mapping between a public key and the accountID exists, wherein if the mapping exists, a multi-factor authentication provider smart contract (240), that is deployed in at least one blockchain, returns the accountID together with an address of an oracle server (275) and an integer that identifies a task in the oracle server (275), and if the mapping does not exist, a noPaired notification is returned;
- calling a function in SDK and performing an in-chain call to a function OracleRequest in an oracle operator smart contract (250), the function Oracle Request including: the accountlD, a callback smart contract address; a callback smart contract function Id, an oracle token address, and the integer;
- performing, by the oracle operator smart contract (250), a gas payment and emitting an event with the accountID and the integer as parameter;
- upon reception of the event, the oracle server (275) executing the task identified by the integer, the task performing an API call to an oracle interaction backend (276) that further calls a checkStatus API;
- in response to the checkStatus API, the multi-factor authentication server (300) returning the established multi-factor approval status to the oracle server (275) via the oracle interaction backend (276);
- given the established multi-factor approval status, performing, by the oracle server (275), a call to a function fullfillOracleRequest2 of the oracle operator smart contract (250), the latter further propagating the established multi-factor approval status to the customer smart contract (226).

2. The method of claim 1, wherein the mapping being created by executing a pairing process that:
- provides a pairingToken;
- exposes the public key to a decentralized application, DAPP, (230);
- calls a smart contract function pair (public key, pairingToken) of the multi-factor authentication provider smart contract (240);
- performs an in-chain call to the oracle operator smart contract (250);
- performs, by the oracle operator smart contract (250), a gas payment, the oracle operator smart contract (250) further emitting an event pair that includes: the public key, the pairingToken, and the integer to execute the pairing;
- generates, by the oracle server (275), a unique requestID, the oracle server (275) further running a pairing task by interacting with the oracle interaction backend (276);
- verifies, by the oracle interaction backend (276), that the pairingToken is not expired and that is associated to the end-user by interacting with the multi-factor authentication server (300), the latter returning the accountID in case the verification is true;
- performs, by the oracle server (275), a call to the function fullfillOracleRequest2 of the oracle operator smart contract (250) with accountID as input parameter, the oracle operator smart contract (250) performing a callback to said function towards the multi-factor authentication provider smart contract (240), such that upon reception of the callback the mapping is created.

3. The method of any one of the previous claims, wherein the public key is an identifier of a wallet, or WalletID.

4. The method of any one of the previous claims, wherein the blockchain services include web3 services.

5. A system for multi-factor authentication for blockchain services, the system comprising:
at least one blockchain;
a multi-factor authentication provider smart contract (240) configured to operate or to be deployed in the at least one blockchain;
an oracle network comprising an oracle server (275), an oracle operator smart contract (250) and an oracle interaction backend (276); and
a push-mode multi-factor authentication server (300), configured to hold an account of an end-user, the account being identifiable via an accountID;
wherein, in response to an operation to be performed in a customer smart contract (226), the smart contract (226) is configured to interact with the push-mode multi-factor authentication server (300) to confirm a multi-factor approval status established by the end-user in the push-mode multi-factor authentication server (300), by means of:
- checking whether a mapping between a public key and the accountID exists, wherein if the mapping exists, the multi-factor authentication provider smart contract (240) returns the accountID together with an address of the oracle server (275) and an integer that identifies a task in the oracle server (275), and if the mapping does not exist, a noPaired notification is returned;
- calling a function in SDK (225) and performing an in-chain call to a function OracleRequest in the oracle operator smart contract (250), the function Oracle Request including: the accountlD, a callback smart contract address; a callback smart contract function Id, an oracle token address, and the integer;
- performing, by the oracle operator smart contract (250), a gas payment and emitting an event with the accountID and the integer as parameter;
- upon reception of the event, the oracle server (275) executing the task identified by the integer, the task performing an API call to the oracle interaction backend (276) that further calls a checkStatus API;
- in response to the checkStatus API, the multi-factor authentication server (300) returning the established multi-factor approval status to the oracle server (275) via the oracle interaction backend (276);
- given the established multi-factor approval status, performing, by the oracle server (275), a call to a function fullfillOracleRequest2 of the oracle operator smart contract (250), the latter further propagating the established multi-factor approval status to the customer smart contract (226).

6. The system of claim 5, wherein the public key is an identifier of a wallet or WalletID.

7. The system of claim 5 or 6, wherein the blockchain services include web3 services.

## Patentansprüche

1. Verfahren zur Multifaktorauthentifizierung für Blockchain-Dienste, wobei das Verfahren umfasst:
Halten, durch einen Push-Modus-Multifaktorauthentifizierungsserver (300), eines Kontos eines Endbenutzers, wobei das Konto über eine accountID identifizierbar ist;
Einrichten, durch den Endbenutzer, eines Multifaktorgenehmigungsstatus in dem Push-Modus-Multifaktorauthentifizierungsserver (300);
als Reaktion auf eine in einem Kunden-Smart-Contract (226) durchzuführende Operation, Interagieren des Kunden-Smart-Contracts (226) mit dem Push-Modus-Multifaktorauthentifizierungsserver (300), um den eingerichteten MultifaktorGenehmigungsstatus zu bestätigen, wobei der Interaktionsschritt umfasst:
- Prüfen, ob eine Zuordnung zwischen einem öffentlichen Schlüssel und der accountID existiert, wobei, wenn die Zuordnung existiert, ein Multifaktorauthentifizierungsanbieter-Smart-Contract (240), der in mindestens einer Blockchain eingesetzt wird, die accountID zusammen mit einer Adresse eines Oracle-Servers (275) und einer Ganzzahl zurückgibt, die eine Aufgabe in dem Oracle-Server (275) kennzeichnet, und wenn die Zuordnung nicht existiert, eine noPaired-Benachrichtigung zurückgegeben wird;
- Aufrufen einer Funktion im SDK und Durchführen eines Chain-internen Aufrufs einer Funktion OracleRequest in einem Oracle-Betreiber-Smart-Contract (250), wobei die Funktion "Oracle Request" einschließt: die accountlD, eine Rückruf-Smart-Contract-Adresse; eine Rückruf-Smart-Contract-Funktions-ID, eine Oracle-Token-Adresse und die Ganzzahl;
- Durchführen, durch den Oracle-Betreiber-Smart-Contract (250), einer Gaszahlung und Ausgeben eines Ereignisses mit der accountID und der Ganzzahl als Parameter;
- bei Empfang des Ereignisses Ausführen, durch den Oracle-Server (275) der durch die Ganzzahlige kennzeichnete Aufgabe, wobei die Aufgabe einen API-Aufruf eines Oracle-Interaktions-Backends (276) durchführt, das ferner eine checkStatus-API aufruft;
- als Reaktion auf die checkStatus-API Zurückgeben, durch den Multifaktorauthentifizierungsserver (300), des eingerichteten Multifaktorgenehmigungsstatus über das Oracle-Interaktions-Backend (276) an den Oracle-Server (275);
- angesichts des eingerichteten Multifaktorgenehmigungsstatus Durchführen, durch den Oracle-Server (275), eines Aufrufs einer Funktion fullfillOracleRequest2 des Oracle-Betreiber-Smart-Contracts (250), wobei Letztgenanntes ferner den eingerichteten Multifaktorgenehmigungsstatus an den Kunden-Smart-Contract (226) weiterleitet.

2. Verfahren nach Anspruch 1, wobei die Zuordnung durch Ausführen eines Koppelprozesses erzeugt wird, der:
- ein pairingToken bereitstellt;
- den öffentlichen Schlüssel gegenüber einer dezentralen Anwendung, decentralized application, DAPP, (230) offenlegt;
- ein Smart-Contract-Funktionspaar (öffentlicher Schlüssel, pairingToken) des Multifaktorauthentifizierungsanbieter-Smart-Contracts aufruft (240);
- einen Chain-internen Aufruf des Oracle-Betreiber-Smart-Contracts (250) durchführt;
- durch den Oracle-Betreiber-Smart-Contract (250) eine Gaszahlung durchführt, wobei der Oracle-Betreiber-Smart-Contract (250) ferner ein Ereignispaar ausgibt, das einschließt: den öffentlichen Schlüssel, das pairingToken und die Ganzzahl zur Durchführung des Koppelns;
- durch den Oracle-Server (275) eine eindeutige requestlD erzeugt, wobei der Oracle-Server (275) ferner eine Koppelaufgabe durch Interagieren mit dem Oracle-Interaktions-Backend (276) ausführt;
- durch das Oracle-Interaktions-Backend (276) überprüft, dass das pairingToken nicht abgelaufen ist und dass es dem Endnutzer durch Interagieren mit dem Multifaktorauthentifizierungsserver (300) zugeordnet ist, wobei Letztgenanntes die accountID zurückgibt, falls die Überprüfung "Wahr" ergibt;
- durch den Oracle-Server (275) einen Aufruf der Funktion fullfillOracleRequest2 des Oracle-Betreiber-Smart-Contracts (250) mit accountID als Eingabeparameter durchführt, wobei der Oracle-Betreiber-Smart-Contract (250) einen Rückruf an die Funktion gegenüber dem Multifaktorauthentifizierungsanbieter-Smart-Contract (240) durchführt, sodass bei Empfang des Rückrufs die Zuordnung erstellt wird.

3. Verfahren nach einem der vorhergehenden Ansprüche, wobei der öffentliche Schlüssel eine Kennung einer Brieftasche oder WalletID ist.

4. Verfahren nach einem der vorhergehenden Ansprüche, wobei die Blockchain-Dienste Web3-Dienste einschließen.

5. System zur Multifaktorauthentifizierung für Blockchain-Dienste, wobei das System umfasst:
mindestens eine Blockchain;
einen Multifaktorauthentifizierungsanbieter-Smart-Contract (240), der konfiguriert ist, um in der mindestens einen Blockchain betrieben oder eingesetzt zu werden;
ein Oracle-Netzwerk, das einen Oracle-Server (275), einen Oracle-Betreiber-Smart-Contract (250) und ein Oracle-Interaktions-Backend (276) umfasst; und
einen Push-Modus-Multifaktorauthentifizierungsserver (300), der konfiguriert ist, um ein Konto eines Endbenutzers zu halten, wobei das Konto über eine accountlD identifizierbar ist;
wobei als Reaktion auf eine in einem Kunden-Smart-Contract (226) auszuführende Operation der Smart-Contract (226) konfiguriert ist, um mit dem Push-Modus-Multifaktorauthentifizierungsserver (300) zu interagieren, um einen durch den Endbenutzer in dem Push-Modus-Multifaktorauthentifizierungsserver (300) eingerichteten Multifaktorgenehmigungsstatus zu bestätigen mittels:
- Prüfen, ob eine Zuordnung zwischen einem öffentlichen Schlüssel und der accountID existiert, wobei, wenn die Zuordnung existiert, der Multifaktorauthentifizierungsanbieter-Smart-Contract (240) die accountlD zusammen mit der Adresse eines Oracle-Servers (275) und einer Ganzzahl zurückgibt, die eine Aufgabe in dem Oracle-Server (275) kennzeichnet, und wenn die Zuordnung nicht existiert, eine noPaired-Benachrichtigung zurückgegeben wird;
- Aufrufen einer Funktion im SDK (225) und Durchführen eines Chain-internen Aufrufs einer Funktion OracleRequest in dem Oracle-Betreiber-Smart-Contract (250), wobei die Funktion "Oracle Request" einschließt: die accountID, eine Rückruf-Smart-Contract-Adresse; eine Rückruf-Smart-Contract-Funktions-ID, eine Oracle-Token-Adresse und die Ganzzahl;
- Durchführen, durch den Oracle-Betreiber-Smart-Contract (250), einer Gaszahlung und Ausgeben eines Ereignisses mit der accountID und der Ganzzahl als Parameter;
- bei Empfang des Ereignisses Ausführen, durch den Oracle-Server (275) der durch die Ganzzahlige kennzeichnete Aufgabe, wobei die Aufgabe einen API-Aufruf des Oracle-Interaktions-Backends (276) durchführt, das ferner eine checkStatus-API aufruft;
- als Reaktion auf die checkStatus-API Zurückgeben, durch den Multifaktorauthentifizierungsserver (300), des eingerichteten Multifaktorgenehmigungsstatus über das Oracle-Interaktions-Backend (276) an den Oracle-Server (275);
- angesichts des eingerichteten Multifaktorgenehmigungsstatus Durchführen, durch den Oracle-Server (275), eines Aufrufs einer Funktion fullfillOracleRequest2 des Oracle-Betreiber-Smart-Contracts (250), wobei Letztgenanntes ferner den eingerichteten Multifaktorgenehmigungsstatus an den Kunden-Smart-Contract (226) weiterleitet.

6. System nach Anspruch 5, wobei der öffentliche Schlüssel eine Kennung einer Brieftasche oder WalletID ist.

7. System nach Anspruch 5 oder 6, wobei die Blockchain-Dienste Web3-Dienste einschließen.

## Revendications

1. Procédé d'authentification multifactorielle pour des services de chaîne de blocs, le procédé comprenant :
la conservation, par un serveur d'authentification multifactorielle en mode diffusion sélective (300), d'un compte d'un utilisateur final, le compte étant identifiable par l'intermédiaire d'un accountID ;
l'établissement, par l'utilisateur final, d'un statut d'approbation multifactorielle dans le serveur d'authentification multifactorielle en mode diffusion sélective (300) ;
en réponse à une opération à réaliser dans un contrat intelligent de consommateur (226), le contrat intelligent de consommateur (226) interagissant avec le serveur d'authentification multifactorielle en mode diffusion sélective (300) pour confirmer le statut d'approbation multifactorielle établi, l'étape d'interaction comprenant :
- la vérification de si un mappage entre une clé publique et l'accountlD existe, dans lequel si le mappage existe, un contrat intelligent de fournisseur d'authentification multifactorielle (240), qui est déployé dans au moins une chaîne de blocs, renvoie l'accountID conjointement avec une adresse d'un serveur d'oracle (275) et un nombre entier qui identifie une tâche dans le serveur d'oracle (275), et si le mappage n'existe pas, une notification noPaired est renvoyée ;
- l'appel d'une fonction dans SDK et la réalisation d'un appel en chaîne à une fonction OracleRequest dans un contrat intelligent d'opérateur d'oracle (250), la fonction Oracle Request comportant : l'accountID, une adresse de contrat intelligent de rappel ; une Id de fonction de contrat intelligent de rappel, une adresse de jeton d'oracle, et le nombre entier ;
- la réalisation, par le contrat intelligent d'opérateur d'oracle (250), d'un paiement de gaz et l'émission d'un événement avec l'accountID et le nombre entier comme paramètre ;
- lors de la réception de l'événement, le serveur d'oracle (275) exécutant la tâche identifiée par le nombre entier, la tâche réalisant un appel API à une extrémité dorsale d'interaction d'oracle (276) qui appelle en outre une API checkStatus ;
- en réponse à l'API checkStatus, le serveur d'authentification multifactorielle (300) renvoyant le statut d'approbation multifactorielle établi au serveur d'oracle (275) par l'intermédiaire de l'extrémité dorsale d'interaction d'oracle (276) ;
- compte tenu du statut d'approbation multifactorielle établi, la réalisation, par le serveur d'oracle (275), d'un appel à une fonction fullfillOracleRequest2 du contrat intelligent d'opérateur d'oracle (250), ce dernier propageant en outre le statut d'approbation multifactorielle établi au contrat intelligent de consommateur (226).

2. Procédé selon la revendication 1, dans lequel le mappage étant créé par l'exécution d'un processus d'appariement qui :
- fournit un pairingToken ;
- expose la clé publique à une application décentralisée, DAPP, (230) ;
- appelle une paire de fonctions de contrat intelligent (clé publique, pairingToken) du contrat intelligent de fournisseur d'authentification multifactorielle (240) ;
- réalise un appel en chaîne au contrat intelligent d'opérateur d'oracle (250) ;
- réalise, par le contrat intelligent d'opérateur d'oracle (250), un paiement de gaz, le contrat intelligent d'opérateur d'oracle (250) émettant en outre une paire d'événements qui comporte : la clé publique, le pairingToken, et le nombre entier pour exécuter l'appariement ;
- génère, par le serveur d'oracle (275), une requestlD unique, le serveur d'oracle (275) poursuivant l'exploitation d'une tâche d'appariement par interaction avec l'extrémité dorsale d'interaction d'oracle (276) ;
- vérifie, par l'extrémité dorsale d'interaction d'oracle (276), que le pairingToken n'a pas expiré et qu'il est associé à l'utilisateur final par interaction avec le serveur d'authentification multifactorielle (300), ce dernier renvoyant l'accountID dans un cas où la vérification est vraie ;
- réalise, par le serveur d'oracle (275), un appel à la fonction fullfillOracleRequest2 du contrat intelligent d'opérateur d'oracle (250) avec accountID comme paramètre d'entrée, le contrat intelligent d'opérateur d'oracle (250) réalisant un rappel à ladite fonction vers le contrat intelligent de fournisseur d'authentification multifactorielle (240), de telle sorte que lors de la réception du rappel, le mappage est créé.

3. Procédé selon l'une quelconque des revendications précédentes, dans lequel la clé publique est un identifiant d'un portefeuille, ou WalletID.

4. Procédé selon l'une quelconque des revendications précédentes, dans lequel les services de chaîne de blocs comportent des services web3.

5. Système d'authentification multifactorielle pour des services de chaîne de blocs, le système comprenant :
au moins une chaîne de blocs ;
un contrat intelligent de fournisseur d'authentification multifactorielle (240) configuré pour fonctionner ou pour être déployé dans l'au moins une chaîne de blocs ;
un réseau d'oracle comprenant un serveur d'oracle (275), un contrat intelligent d'opérateur d'oracle (250) et une extrémité dorsale d'interaction d'oracle (276) ; et
un serveur d'authentification multifactorielle en mode diffusion sélective (300), configuré pour conserver un compte d'un utilisateur final, le compte étant identifiable par l'intermédiaire d'un accountID ;
dans lequel, en réponse à une opération à réaliser dans un contrat intelligent de consommateur (226), le contrat intelligent (226) est configuré pour interagir avec le serveur d'authentification multifactorielle en mode diffusion sélective (300) pour confirmer un statut d'approbation multifactorielle établi par l'utilisateur final dans le serveur d'authentification multifactorielle en mode diffusion sélective (300), au moyen de :
- la vérification de si un mappage entre une clé publique et l'accountlD existe, dans lequel si le mappage existe, le contrat intelligent de fournisseur d'authentification multifactorielle (240) renvoie l'accountID conjointement avec une adresse du serveur d'oracle (275) et un nombre entier qui identifie une tâche dans le serveur d'oracle (275), et si le mappage n'existe pas, une notification noPaired est renvoyée ;
- l'appel d'une fonction dans SDK (225) et la réalisation d'un appel en chaîne à une fonction OracleRequest dans le contrat intelligent d'opérateur d'oracle (250), la fonction Oracle Request comportant : l'accountID, une adresse de contrat intelligent de rappel ; une Id de fonction de contrat intelligent de rappel, une adresse de jeton d'oracle, et le nombre entier ;
- la réalisation, par le contrat intelligent d'opérateur d'oracle (250), d'un paiement de gaz et l'émission d'un événement avec l'accountID et le nombre entier comme paramètre ;
- lors de la réception de l'événement, le serveur d'oracle (275) exécutant la tâche identifiée par le nombre entier, la tâche réalisant un appel API à l'extrémité dorsale d'interaction d'oracle (276) qui appelle en outre une API checkStatus ;
- en réponse à l'API checkStatus, le serveur d'authentification multifactorielle (300) renvoyant le statut d'approbation multifactorielle établi au serveur d'oracle (275) par l'intermédiaire de l'extrémité dorsale d'interaction d'oracle (276) ;
- compte tenu du statut d'approbation multifactorielle établi, la réalisation, par le serveur d'oracle (275), d'un appel à une fonction fullfillOracleRequest2 du contrat intelligent d'opérateur d'oracle (250), ce dernier propageant en outre le statut d'approbation multifactorielle établi au contrat intelligent de consommateur (226).

6. Système selon la revendication 5, dans lequel la clé publique est un identifiant d'un portefeuille ou WalletlD.

7. Système selon la revendication 5 ou 6, dans lequel les services de chaîne de blocs comportent des services web3.
